# EUROPÄISCHE PATENTSCHRIFT

(11) **EP 3 517 509 B1**
(45) Veröffentlichungstag und Bekanntmachung des Hinweises auf die Patenterteilung: **20.05.2020**
(21) Anmeldenummer: 18212742.3
(22) Anmeldetag: 14.12.2018
(51) Int. Cl.: C03B 7/06

(54) **VORRICHTUNG UND VERFAHREN ZUM BEHEIZEN UND TRANSPORTIEREN EINER GLASSCHMELZE**
DEVICE AND METHOD FOR HEATING AND TRANSPORTING A GLASS MELT
DISPOSITIF ET PROCÉDÉ DE CHAUFFAGE ET DE TRANSPORT D'UNE FONTE DE VERRE

(30) Priorität: 25.01.2018 DE 102018000572
(43) Veröffentlichungstag der Anmeldung: 31.07.2019
(73) Patentinhaber: Messer Austria GmbH, 2352 Gumpoldskirchen (AT)
(72) Erfinder: Demuth, Martin, 2353 Guntramsdorf (AT)
(74) Vertreter: Münzel, Joachim R.

(56) Entgegenhaltungen:
- WO-A1-94/06723
- WO-A1-2015/048405

## Beschreibung

Die Erfindung betrifft eine Vorrichtung zum Beheizen und Transportieren einer Glasschmelze, mit einem von Seitenwänden und einer Decke eingefassten Speiserkanal zum Transportieren einer Glasschmelze von einem Eingangsbereich zu einem Ausgangsbereich des Speiserkanals und mit Heizmitteln zum Temperieren der Glasschmelze im Speiserkanal. Die Erfindung betrifft des Weiteren ein entsprechendes Verfahren.

Bei der erfindungsgemäßen Vorrichtung handelt es sich somit um einen Feeder bzw. Speiser, der bei der Glasproduktion insbesondere dafür eingesetzt wird, in einem Schmelzofen aufgeschmolzenes Gas zur Weiterverarbeitung zu transportieren. Das durch den Speiserkanal geführte flüssige Glas wird beispielsweise am Ende des Feeders im Feederkopf mittels gekühlter Messer zu Tropfen geformt, die in weiteren Verarbeitungsschritten zum fertigen Glaserzeugnis verarbeitet werden, oder in einer sonstigen Weise einer Weiterverarbeitung zugeführt.

Um eine hohe Qualität des erzeugten Glases zu gewährleisten, müssen die Temperaturbedingungen im Feeder sehr genau eingehalten werden. Der Speiserkanal ist daher üblicherweise in mehrere, in Fließrichtung des Glases aufeinanderfolgende Zonen eingeteilt, die jeweils einen Temperaturregelkreis besitzen. Die Beheizung des Glases im Speiserkanal erfolgt dabei üblicherweise entweder elektrisch, mittels direktem Stromdurchgang durch die Schmelze oder indirekt mittels elektrischer Heizwiderstände, oder chemisch, mittels Brennern, die in Längsrichtung des Speiserkanals beabstandet voneinander angeordnet sind und bei denen jeweils ein meist gasförmiger Brennstoff mit einem Oxidationsmittel unter Ausbildung einer Flamme verbrannt wird.

Bei einer direkten elektrischen Beheizung lässt sich die Temperatur leicht automatisch regeln, es entstehen keine Abgase und auftretende Wärmeverluste können durch eine geeignete Anordnung der Elektroden auf ein Minimum herabgedrückt werden. Allerdings besteht die Gefahr, dass durch aufgelöstes Elektrodenmaterial die Glasmasse verfärbt wird, was gerade beim Schmelzen farbloser Gläser von wesentlicher Bedeutung ist.

Speiser, die mittels Verbrennung eines Brennstoffs beheizt werden, weisen üblicherweise eine Mehrzahl an Brennern auf, die, in Fließrichtung des Glases gesehen, beabstandet voneinander in den Seitenwänden oder der Decke des Speiserkanals angeordnet sind. Bei den Brennern handelt es sich meist um Brennstoff-Luft-Brenner oder um Brennstoff-Sauerstoff-Brenner (Oxyfuel-Brenner). Die Brenner weisen dazu entweder parallel zueinander verlaufende Zuführungen für Brennstoff und Oxidationsmittel auf, die gemeinsam an einer Brennerstirn in den Speiserkanal ausmünden, oder Brennstoff und Oxidationsmittel werden in einer innerhalb des Brenners angeordneten Mischkammer oder bereits vor Erreichen des Brenners miteinander vermischt, und das entstehende Gemisch wird über eine gemeinsame Zuführung in den Speiserkanal eingetragen. In beiden Fällen bildet sich im Einsatz unmittelbar vor der Mündungsöffnung des Brenners eine Flamme aus, durch deren Wärmestrahlung die Oberfläche der Glasschmelze beheizt wird. Meist sind die Brenner derart in den Seitenwänden des Speiserkanals angeordnet, dass die von ihnen ausgehenden Flammen im wesentlichen parallel zur Oberfläche der Glasschmelze und senkrecht zu deren Fließrichtung gerichtet sind.

Speiseranordnungen dieser Art und zugehörige Brenner sind beispielsweise in der US 3 523 781 A1, der US 5 417 732 B1 oder der US 5 814 121 B1 beschrieben.

WO9406723 A1 offenbart in einen Speiserkanal mit in Fließrichtung der Glasschmelze alternierenden Zuführungen eines Brennstoffs und eines Oxidationsmittels (vorzugsweise Sauerstoff von industrieller Güte), wobei der Brennstoff und das Oxidationsmittel in der Mitte des Speiserkanals reagieren und eine Flammenwolke bilden, die das Glas im Kanal gleichmäßig erwärmt. Die Zufuhr von Brennstoff und Oxidationsmittel ist in beiden Seitenwänden angeordnet, wobei sich jeweils der Einlass von Brennstoff einem von Oxidationsmittel gegenüberliegt, d.h., die Zufuhr ist versetzt.

WO2015048405 A1 lehrt die Ausrichtung von Brennern in einem Speiserkanal entlang den Seitenwänden.

Das Schmelzen von Glas ist ein sehr energieintensiver Prozess und benötigt hohe Temperaturen von etwa 1100°C - 1600°C. Dabei spielt eine möglichst homogene Temperaturverteilung innerhalb des Speiserkanals eine große Rolle für die Qualität des erzeugten Glases. Um lokale Überhitzungen zu vermeiden benötigen Feeder, die mit einer Brennstoff-Luft-Brennertechnologie arbeiten, eine vergleichsweise große Zahl von in Längserstreckung des Speiserkanals angeordneten Brennern.

Durch die verbesserte Wärmeübertragung, basierend insbesondere auf einer vermehrten Wärmestrahlung aufgrund weniger Ballaststoffe wie Stickstoff in der Ofenatmosphäre ermöglicht die Oxyfuel-Technologie eine gegenüber Brennstoff-Luft Brennern gleichmäßigere Erwärmung des Gutes im Feeder und somit eine deutliche Erhöhung der Temperaturhomogenität in der Schmelze. Zugleich kann die Zahl an Brennern pro Streckeneinheit am Speiserkanal deutlich reduziert werden, was die Installationskosten verringert und zudem zu einer erheblichen Brennstoffeinsparung führt. Eine Verringerung des Schadstoffausstoßes und eine Erhöhung der Produktionskapazität sind weitere Verbesserungen, die die Oxyfuel-Technologie gegenüber dem Einsatz von Brennstoff-Luft-Brennern mit sich bringt. Allerdings kann die Anzahl der Brenner pro Streckeneinheit nicht beliebig verringert werden, da es ansonsten zu Inhomogenitäten in der Temperaturverteilung kommt. Demzufolge ist der Einsatz einer größeren Anzahl vergleichsweise klein bauender Oxyfuel-Brenner notwendig, die teuer in der Anschaffung sind und zudem zur Ausbildung unerwünschter turbulenter Strömungen in der Flamme neigen. Auch ist auch beim Einsatz von Brennstoff-Sauerstoffbrennern, insbesondere bei schmalen Speiserkanälen, die Gefahr von lokalen Überhitzungen nicht auszuschließen.

Es wurde bereits versucht, die Temperaturverhältnisse im Feeder durch eine veränderte Geometrie der Anordnung der Brenner zu verbessern. So ist aus der EP 0 167 447 A1 ein Feeder bekannt, der mittels Brennern beheizt wird, die in der Decke des Speiserkanals angeordnet sind. Aus der WO 2015/048405 A1 ist eine Feederanordnung mit Brennstoff-Sauerstoff-Brennern als Heizmittel bekannt, die so im Speiserkanal angeordnet sind, dass die aus ihnen austretenden Flammen parallel zur Fließrichtung des Glases im Speiserkanal verlaufen.

Der Erfindung liegt die Aufgabe zu Grunde, eine Feederanordnung und ein Verfahren zur Beheizung geschmolzenen Glases in einem Feeder anzugeben, das eine sehr homogene Temperaturverteilung in der Glasschmelze ermöglicht und einfach und preisgünstig in Installation und Betrieb ist.

Gelöst ist diese Aufgabe bei einer Vorrichtung gemäß Anspruch 1 der eingangs genannten Art und Zweckbestimmung dadurch, dass die Heizmittel Lanzen für einen Brennstoff und Lanzen für ein Oxidationsmittel umfassen, welche Lanzen - in Fließrichtung der Glasschmelze gesehen - beabstandet voneinander in den Speiserkanal einmünden.

Die erfindungsgemäße Vorrichtung weist also einen Speiserkanal mit einem Eingangsbereich und einem Ausgangsbereich auf, durch den im Einsatz der Vorrichtung eine Glasschmelze transportiert und dadurch eine Fließrichtung definiert.

Die Glasschmelze wird dabei beheizt, um eine erforderliche Temperatur von beispielsweise 1100°C bis 1600°C der Glasschmelze aufrechtzuerhalten. Die Beheizung erfolgt dabei durch Verbrennen eines Brennstoffs mit einem Oxidationsmittel.

Im Gegensatz zu Feedern nach dem Stande der Technik, bei denen als Heizmittel in Fließrichtung der Glasschmelze voneinander beabstandet angeordnete Brenner zum Einsatz kommen, die jeweils sowohl Brennstoff als auch Oxidationsmittel in den Speiserkanal zuführen, sind bei der erfindungsgemäßen Vorrichtung Lanzen vorgesehen, über die jeweils nur ein Reaktand - Brennstoff oder Oxidationsmittel - in den Speiserkanal eingebracht wird. Diese Lanzen sind in einer Seitenwand, beiden Seitenwänden und/oder der Decke des Speiserkanals in Fließrichtung der Glasschmelze voneinander beabstandet angeordnet, sodass sich über die Längserstreckung des Speiserkanals eine gleichmäßige Zuführung von Brennstoff und Oxidationsmittel ergibt. Brennstoff und Oxidationsmittel vermischen sich erst im Speiserkanal zu einem zündfähigen Gemisch, das aufgrund der hohen Temperaturen in Speiserkanal von selbst zündet oder mittels einer geeigneten Zündvorrichtung gezündet wird.

Als "Brenner" soll im Kontext dieser Erfindung eine Einrichtung verstanden werden, an denen Brennstoff und Oxidationsmittel gemeinsam - entweder über getrennte Zuführungen innerhalb eines Brennerkopfes oder als Gemisch über eine gemeinsame, mit Zuleitungen für Brennstoff und für Oxidationsmittel strömungsverbundene Zuführung - in einen Behandlungsraum, insbesondere einen Speiserkanal, eingetragen werden. Als "Zuführung" soll eine rohrförmige Einrichtung bezeichnet werden, mittels der ein Stoffstrom - im Kontext der Erfindung Brennstoff oder Oxidationsmittel oder ein Brennstoff-Oxidationsmittelgemisch - in einen Behandlungsraum eingetragen wird. Als "Lanze" oder "Düse" soll hier eine Zuführung bezeichnet werden, mittels der lediglich Brennstoff oder lediglich Oxidationsmittel in einen Behandlungsraum eingetragen wird und die mit einer Quelle für diesen Stoffstrom strömungsverbunden ist.

Der erfindungsgemäße Einsatz von Zuführungen in Form von Lanzen oder Düsen für Brennstoff bzw. für Oxidationsmittel anstelle von Brennern ist wesentlich kostengünstiger in Einbau und Wartung und weist geringere Wärmeverluste durch die Wände des Speiserkanals auf. Zudem wird die thermische Belastung des Wandmaterials reduziert.

Eine besonders vorteilhafte Ausgestaltung der Erfindung sieht vor, dass die Lanzen für Brennstoff und die Lanzen für Oxidationsmittel - in Fließrichtung des Glases gesehen - alternierend in wenigstens einer der Seitenwände und/oder in der Decke des Speiserkanals angeordnet sind, d.h. auf eine Lanze - oder mehrerer Lanzen - für Brennstoff folgt eine Lanze - oder mehrere Lanzen - für ein Oxidationsmittel und umgekehrt.

Eine besonders vorteilhafte Ausgestaltung der Erfindung sieht vor, dass in beiden Seitenwänden des Speiserkanals Lanzen für Brennstoff und Oxidationsmittel vorgesehen sind, wobei die Lanzen, insbesondere die Lanzen für den gleichen Stoffstrom - in Fließrichtung der Glasschmelze gesehen - gegeneinander versetzt angeordnet sind. Die versetzte Anordnung verhindert eine inhomogene Temperaturverteilung im Speiserkanal und reduziert damit die Gefahr lokaler Überhitzungen.

Eine besonders gleichmäßige Temperaturverteilung wird auch dadurch erreicht, dass sich in den Seitenwänden senkrecht zur Fließrichtung jeweils wenigstens eine Lanze für den Brennstoff und wenigstens eine Lanze für das Oxidationsmittel gegenüberstehen Beispielsweise münden die Lanzen in beiden Seitenwänden mit in Fließrichtung gleichen Abständen aus und sind alternierend angeordnet, d.h. in Fließrichtung gesehen wechseln sich Brennstofflanzen und Oxidationsmittellanzen einander ab, wobei die Lanzen für Brennstoff und Oxidationsmittel in beiden Seitenwänden um eine Position gegeneinander versetzt angeordnet sind, also derart, dass jeweils eine Brennstofflanze und eine Oxidationsmittellanze einander gegenüberliegend in den Speiserkanal einmünden.

Gemäß der Erfindung ist es vorgesehen, dass zumindest ein Teil der Lanzen für den Brennstoff und/oder der Lanzen für das Oxidationsmittel derart in den Seitenwänden und/oder der Decke angeordnet sind, dass der austretende Stoffstrom oberhalb der Oberfläche der Glasschmelze zumindest mit einer Richtungskomponente parallel oder entgegen der Fließrichtung der Glasschmelze gerichtet ist.

Eine gleichfalls vorteilhafte Ausführungsform der Erfindung ist dadurch gekennzeichnet, dass der Durchfluss durch wenigstens einen Teil der Lanzen für den Brennstoff und/oder der Lanzen für das Oxidationsmittel in Abhängigkeit von einem gemessenen physikalischen oder chemischen Parameter jeweils regelbar ist.

Dabei können beispielsweise alle Lanzen individuell angesteuert und der Durchfluss somit durch jede einzelne der Lanzen geregelt werden, um das Temperaturprofil im Innern des Speiserkanals den jeweiligen Erfordernissen anpassen zu können. In einem anderen Beispiel ist die erfindungsgemäße Vorrichtung in mehrere Abschnitte (Segmente) unterteilt, die jeweils einen Speiserkanal und mehrere in diesen einmündende Lanzen aufweisen. In diesem Fall können die Lanzen eines Segments in Abhängigkeit eines dort gemessenen Parameters angesteuert und der Mengenstrom des diesem Segment zugeführten Brennstoffs und/oder Oxidationsmittels entsprechend geregelt werden. Bevorzugte Regelparameter sind beispielsweise Temperatur oder Viskosität der Schmelze, oder eine gemessene Temperaturverteilung innerhalb des Speiserkanals.

Die erfindungsgemäße Aufgabe wird auch durch ein Verfahren mit den Merkmalen des Patentanspruchs 5 gelöst.

Ein Verfahren zum Beheizen und Transportieren einer Glasschmelze in einem zum Transportieren Aufnahme einer Glasschmelze bestimmten Speiserkanal ist erfindungsgemäß dadurch gekennzeichnet, dass in den Speiserkanal - in Fließrichtung der Glasschmelze gesehen - jeweils beabstandet voneinander Brennstoff und Oxidationsmittel zugeführt und im Speiserkanal miteinander zur Reaktion gebracht werden. Gemäß dem erfindungsgemäßen Verfahren werden also Brennstoff und Oxidationsmittel getrennt voneinander über jeweils eigene, in Fließrichtung des Glases beabstandet voneinander angeordnete, Lanzen eingetragen.

Bevorzugt werden dabei Brennstoff und Oxidationsmittel - in Fließrichtung gesehen - alternierend eingetragen. In den Seitenwänden oder der Decke des Speiserkanals sind also voneinander beabstandet angeordnete Lanzen vorgesehen, wobei die einzelnen Lanzen, oder Gruppen von Lanzen, - in Fließrichtung gesehen - alternierend mit Brennstoff und mit Oxidationsmittel beaufschlagt werden. Der aus den Brennstofflanzen eingetragene Brennstoff und das aus den Oxidationsmittellanzen eingetragene Oxidationsmittel vermischt sich oberhalb der Glasschmelze im Dachraum des Speiserkanals zu einem brennbaren Gasgemisch, das nach Zündung eine sehr gleichmäßige Erwärmung der Glasschmelze bewirkt.

Die Zündung erfolgt entweder mittels einer im Speiserkanal eingebauten Zündvorrichtung oder als Selbstzündung, indem die Atmosphäre im Speiserkanal auf eine zur Selbstzündung des Brennstoff-Oxidationsmittel-Gemisches geeignete Temperatur vorgeheizt wird. Zur Vorheizung des Speiserkanals kommt beispielsweise ein Zündbrenner, mittels dessen die Atmosphäre im Speiserkanal auf eine Temperatur von beispielsweise 1000°C gebracht wird und so eine Selbstzündung des über die Brennstoff- und Oxidationsmittellanzen eingebrachten Gasgemisches ermöglicht.

Der Eintrag von Brennstoff und Oxidationsmittel erfolgt dabei in den Gasraum oberhalb der Glasschmelze über Lanzen in den Seitenwänden und/oder in der Decke des Speiserkanals. Im Falle des Eintrags über Lanzen in den Seitenwänden empfiehlt es sich, die gleiche Anzahl an Lanzen in beiden Seitenwänden vorzusehen, um eine möglichst große Homogenität der Temperatur im Speiserkanal zu erreichen. Der Eintrag erfolgt dabei mit einer Richtungskomponente parallel zur Fließrichtung der Glasschmelze im Speiserkanal und bevorzugt parallel zur Oberfläche der Glasschmelze.

Eine gleichfalls vorteilhafte Ausführungsform der Erfindung ist dadurch gekennzeichnet, dass der Durchfluss durch wenigstens einen Teil der Lanzen für den Brennstoff und/oder der Lanzen für das Oxidationsmittel in Abhängigkeit von einem gemessenen physikalischen oder chemischen Parameter geregelt wird.

Dabei können beispielsweise alle Lanzen individuell angesteuert und der Durchfluss somit durch jede einzelne der Lanzen geregelt werden, um das Temperaturprofil im Innern des Speiserkanals den jeweiligen Erfordernissen anpassen zu können. In einem anderen Beispiel ist die erfindungsgemäße Vorrichtung in mehrere Abschnitte (Segmente) unterteilt, die jeweils einen Speiserkanal und mehrere in diesen einmündende Lanzen aufweisen. In diesem Fall können die Lanzen eines Segments in Abhängigkeit eines dort gemessenen Parameters angesteuert und der Mengenstrom des diesem Segment zugeführten Brennstoffs und/oder Oxidationsmittels entsprechend geregelt werden. Bevorzugte Regelparameter sind beispielsweise Temperatur oder Viskosität der Schmelze, oder eine gemessene Temperaturverteilung innerhalb des Speiserkanals.

Als Oxidationsmittel kommt bevorzugt Luft, sauerstoffangereicherte Luft mit einem Sauerstoffanteil über 21 Vol.-% oder Sauerstoff mit einer bevorzugten Reinheit über 95 Vol.-% und als Brennstoff bevorzugt ein gasförmiger oder flüssiger Brennstoff, beispielsweise Erdgas zum Einsatz.

Anhand der Zeichnungen soll ein Ausführungsbeispiel der Erfindung näher erläutert werden. In schematischen Ansichten zeigen:
- Fig. 1:: Eine erfindungsgemäße Vorrichtung in einem Querschnitt senkrecht zur Fließrichtung der Glasschmelze und
- Fig. 2:: Die Vorrichtung aus Fig. 1 in einer Schnittansicht entlang der Ebene II-II in Fig. 1.

Bei der Vorrichtung 1 handelt es sich um einen hier nur ausschnittsweise dargestellten Feeder oder Speiser zum Transportieren und Beheizen einer Glasschmelze. Beispielsweise handelt es sich um das Segment eines Feeders, in dem geschmolzenes Gas mit einer Temperatur von beispielsweise 1100°C - 1600°C von einem hier nicht dargestellten Schmelzofen zu einem hier gleichfalls nicht dargestellten Feederkopf geleitet wird, an welchem das im Schmelzofen geschmolzene Glas in Tropfen geschnitten und einer Weiterverarbeitung zugeführt wird.

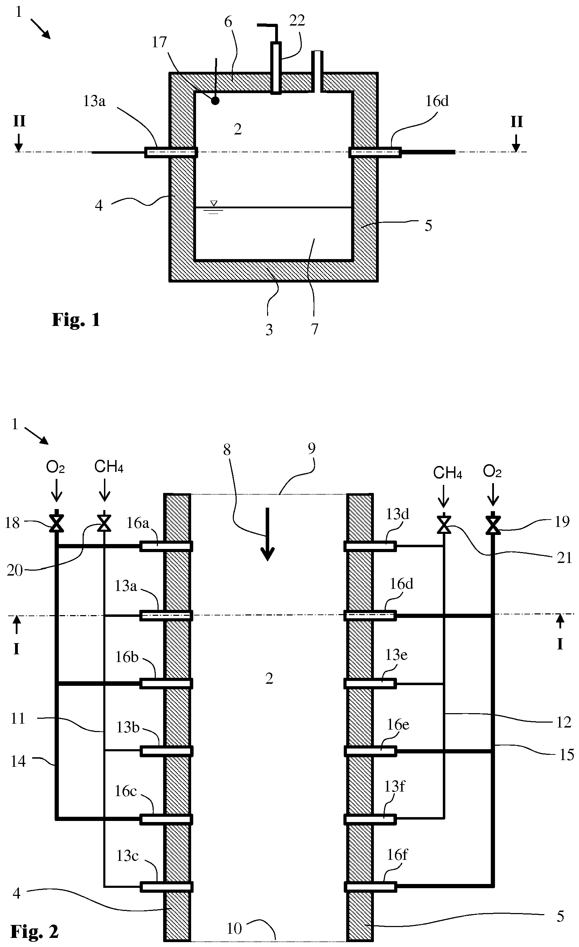

Das hier dargestellte Segment der Vorrichtung 1 umfasst einen Speiserkanal 2, der von einem Boden 3, Seitenwänden 4, 5 und einer Decke 6 aus einem feuerfesten Material eingefasst ist. Der Kanal 2 dient zum Transport einer Glasschmelze 7, die durch den Speiserkanal 2 in Richtung des im Fig. 2 gezeigten Pfeils 8 von einem Eingangsbereich 9 zu einem Ausgangsbereich 10 des Speiserkanals 2 geführt wird.

Der Speiserkanal 2 wird durch Verbrennung eines Brennstoffs, beispielsweise Erdgas, mit einem Oxidationsmittel, beispielsweise Luft oder Sauerstoff mit einer Reinheit von 95 Vol.-% oder mehr, beheizt. Der Brennstoff wird aus einer hier nicht gezeigten Quelle über Zuführleitungen 11, 12 zugeführt, die mit einer Mehrzahl von Brennstofflanzen 13a, 13b, 13c, 13d, 13e, 13f strömungsverbunden sind. Das Oxidationsmittel wird aus einer hier ebenfalls nicht gezeigten Quelle, beispielsweise einem Sauerstofftank, über Zuführleitungen 14, 15 zugeführt, die mit Oxidationsmittellanzen 16a, 16b, 16c, 16d, 16e, 16f strömungsverbunden sind. Die Brennstofflanzen 13a, 13b, 13c, 13d, 13e, 13f und die Oxidationsmittellanzen 16a, 16b, 16c, 16d, 16e, 16f weisen jeweils nur eine Zuführung entweder für Brennstoff oder für Oxidationsmittel auf und münden im in den Zeichnungen gezeigten Ausführungsbeispiel im wesentlichen senkrecht zur Fließrichtung der Glasschmelze 7 (Pfeil 8) in den Speiserkanal 2 ein. Die Brennstofflanzen 13a, 13b, 13c, 13d, 13e, 13f und die Oxidationsmittellanzen 16a, 16b, 16c, 16d, 16e, 16f sind in jeder der Seitenwände 4, 5 alternierend angeordnet, d.h. in Fließrichtung der Glasschmelze 7 wechseln sich Brennstofflanzen 13a, 13b, 13c, 13d, 13e, 13f und Oxidationsmittellanzen 16a, 16b, 16c, 16d, 16e, 16f jeweils einander ab. Dabei sind die Brennstofflanzen 13a, 13b, 13c und die Oxidationsmittellanzen 16a, 16b, 16c in der Seitenwand 4 derart versetzt zu den Brennstofflanzen 13d, 13e, 13f und die Oxidationsmittellanzen 16d, 16e, 16f in der Seitenwand 5 angeordnet, dass senkrecht zur Fließrichtung der Glasschmelze 7 jeweils eine Brennstofflanze 13a, 13b, 13c, 13d, 13e, 13f und eine Oxidationsmittellanze 16a, 16b, 16c, 16d, 16e, 16f gegenüberliegend in den Speiserkanal 2 ausmünden.

Im Betrieb der Vorrichtung 1 wird Brennstoff über die Brennstofflanzen 13a, 13b, 13c, 13d, 13e, 13f und Oxidationsmittel über die Oxidationsmittellanzen 16a, 16b, 16c, 16d, 16e, 16f in den Speiserkanal 2 eingeleitet. Im Innern des Speiserkanals 2 entsteht dadurch ein zündfähiges Gemisch, das anschließend mittels einer hier nicht gezeigten Zündeinrichtung gezündet wird. Die Zündung erfolgt beispielsweise dadurch, dass die Atmosphäre im Innern des Speiserkanals 2 vor der Einleitung des Brennstoffs und des Oxidationsmittels auf eine Temperatur gebracht wird, die über der Zündtemperatur des Gemisches aus Brennstoff und Oxidationsmittel liegt. Nach Zündung des Gemisches erfolgt eine sehr gleichmäßige Verbrennung des Brennstoffs im Speiserkanal 2, wozu insbesondere die alternierende und auf den gegenüberliegenden Seitenwänden gegeneinander versetze Anordnung der Lanzen 13a, 13b, 13c, 13d, 13e, 13f, 16a, 16b, 16c, 16d, 16e, 16f beiträgt.

Der Zustrom an Brennstoff und Oxidationsmittel wird in Abhängigkeit von der Temperatur im Speiserkanal 2, die mittels eines Temperaturfühlers 17 gemessen wird, über eine hier nicht gezeigte Steuereinheit geregelt, die hierzu auf Stellventile 18, 19, 20, 21 in den Zuführleitungen 11, 12, 14, 15 zugreift. Das entstehende Abgas wird über eine Abgasleitung 23 abgezogen.

Anstelle oder ergänzend zur Anordnung der Brennstofflanzen 13a, 13b, 13c, 13d, 13e, 13f und der Oxidationsmittellanzen 16a, 16b, 16c, 16d, 16e, 16f in den Seitenwänden 4,5 können Lanzen für Brennstoff und Oxidationsmittel - ebenfalls in alternierender Reihenfolge - auch in der Decke 6 vorgesehen sein, wie durch die Lanze 22 angedeutet. Ebenso ist es im Rahmen der Erfindung vorstellbar, dass die Brennstofflanzen 13a, 13b, 13c, 13d, 13e, 13f und die Oxidationsmittellanzen 16a, 16b, 16c, 16d, 16e, 16f derart in den Seitenwänden 4, 5 und/oder der Decke 6 angeordnet sind, dass die von ihnen ausgehenden Stoffströme zumindest mit einer Richtungskomponente parallel oder entgegengesetzt zur Fließrichtung der Glasschmelze 7 gerichtet sind.

Die erfindungsgemäße Vorrichtung führt zu einer sehr gleichmäßigen Beheizung des Speiserkanals 2. Gegenüber dem Einsatz von Brennstoff-Luft-Brennern wird eine erhebliche Einsparung an Energie und Schadstoffemissionen erzielt. Gegenüber dem Einsatz von Oxyfuel-Brennern ergibt sich eine erhebliche Kostenersparnis hinsichtlich der eingebauten Hardware; zudem ist die thermische Belastung der Seitenwände 4, 5 erheblich geringer. Auch aus diesem Grund ist die Erfindung insbesondere auch zur Nachrüstung bestehender Speiseranordnungen geeignet.

Die Erfindung ist im Übrigen nicht auf die im Ausführungsbeispiel gezeigte Anordnung alternierend und/oder versetzt zueinander eingebauter Lanzen beschränkt, sondern umfasst auch andere Anordnungen von in Längsrichtung eines Speiserkanals beabstandet voneinander angeordneter Lanzen für Brennstoff und Oxidationsmittel, mit denen eine homogene Temperaturverteilung im Speiserkanal bewirkt werden kann.

### Bezugszeichenliste

- 1: Vorrichtung
- 2: Kanal
- 3: Boden
- 4: Seitenwand
- 5: Seitenwand
- 6: Decke
- 7: Glasschmelze
- 8: Pfeil
- 9: Eingangsbereich
- 10: Ausgangsbereich
- 11: Zuführleitung für Brennstoff
- 12: Zuführleitung für Brennstoff
- 13a-f: Brennstofflanze
- 14: Zuführleitung für Oxidationsmittel
- 15: Zuführleitung für Oxidationsmittel
- 16a-f: Oxidationsmittellanze
- 17: Temperaturfühler
- 18: Stellventil
- 19: Stellventil
- 20: Stellventil
- 21: Stellventil
- 22: Lanze
- 23: Abgasleitung

## Patentansprüche

1. Vorrichtung zum Beheizen und Transportieren einer Glasschmelze, mit einem von Seitenwänden (4, 5) und einer Decke (6) eingefassten Speiserkanal (2) zum Transportieren einer Glasschmelze (7) von einem Eingangsbereich (9) zu einem Ausgangsbereich (10) des Speiserkanals (2) und mit Heizmitteln zum Temperieren der Glasschmelze (7) im Speiserkanal (2), wobei die Heizmittel Lanzen (13a, 13b, 13c, 13d, 13e, 13f) für einen Brennstoff und Lanzen (16a, 16b, 16c, 16d, 16e, 16f) für ein Oxidationsmittel umfassen, welche Lanzen (13a, 13b, 13c, 13d, 13e, 13f, 16a, 16b, 16c, 16d, 16e, 16f) - in Fließrichtung der Glasschmelze (7) gesehen - beabstandet voneinander in den Speiserkanal (2) einmünden,
**dadurch gekennzeichnet,**
**dass** die Lanzen (13a, 13b, 13c, 13d, 13e, 13f) für den Brennstoff und/oder die Lanzen (16a, 16b, 16c, 16d, 16e, 16f) für das Oxidationsmittel zumindest teilweise mit in die Fließrichtung oder gegen die Fließrichtung der Glasschmelze (7) gerichteten Ausmündungen ausgerüstet sind.

2. Vorrichtung nach Anspruch 1, **dadurch gekennzeichnet, dass** die Lanzen (3a, 13b, 13c, 13d, 13e, 13f) für Brennstoff und die Lanzen (16a, 16b, 16c, 16d, 16e, 16f) für Oxidationsmittel - in Fließrichtung der Glasschmelze (7) gesehen - alternierend in wenigstens einer der Seitenwände (4,5) und/oder in der Decke (6) des Speiserkanals (2) angeordnet sind.

3. Vorrichtung nach Anspruch 1 oder 2, **dadurch gekennzeichnet, dass** in den Seitenwänden (4, 5) zu beiden Seiten Lanzen (13a, 13b, 13c, 13d, 13e, 13f; 16a, 16b, 16c, 16d, 16e, 16f) für den Brennstoff und für das Oxidationsmittel vorgesehen sind, wobei die Lanzen (13a, 13b, 13c, 13d, 13e, 13f; 16a, 16b, 16c, 16d, 16e, 16f) in beiden Seitenwänden (4, 5) - in Fließrichtung der Glasschmelze (7) gesehen - gegeneinander versetzt angeordnet sind.

4. Vorrichtung nach einem der vorhergehenden Ansprüche, **dadurch gekennzeichnet, dass** in den Seitenwänden (4, 5) zu beiden Seiten Lanzen (13a, 13b, 13c, 13d, 13e, 13f; 16a, 16b, 16c, 16d, 16e, 16f) für den Brennstoff und für das Oxidationsmittel vorgesehen sind, wobei jeweils wenigstens eine Lanze (13a, 13b, 13c, 13d, 13e, 13f) für den Brennstoff und wenigstens eine Lanze (16a, 16b, 16c, 16d, 16e, 16f) für das Oxidationsmittel einander gegenüberliegend angeordnet sind.

5. Verfahren zum Beheizen und Transportieren einer Glasschmelze in einem zum Transportieren einer Glasschmelze (7) bestimmten Speiserkanal (2), bei dem in den Speiserkanal (2) - in Fließrichtung der Glasschmelze (7) gesehen - beabstandet voneinander Brennstoff und Oxidationsmittel zugeführt und im Speiserkanal (2) miteinander zur Reaktion gebracht werden,
**dadurch gekennzeichnet,**
**dass** der Brennstoff und/oder das Oxidationsmittel mit einer Richtungskomponente parallel zur Fließrichtung der Glasschmelze (7) in den Speiserkanal (2) eingetragen wird.

6. Verfahren nach Anspruch 5, **dadurch gekennzeichnet, dass** in den Speiserkanal (2) - in Fließrichtung der Glasschmelze gesehen - beabstandet voneinander alternierend Brennstoff und Oxidationsmittel zugeführt und im Speiserkanal zur Reaktion gebracht werden.

7. Verfahren nach einem der Ansprüche 5 oder 6, **dadurch gekennzeichnet, dass** der Stoffdurchfluss durch wenigstens einen Teil der Lanzen (13a, 13b, 13c, 13d, 13e, 13f) für den Brennstoff und/oder der Lanzen (16a, 16b, 16c, 16d, 16e, 16f) für das Oxidationsmittel in Abhängigkeit von einem gemessenen physikalischen oder chemischen Parameter geregelt wird.

8. Verfahren nach einem der Ansprüche 5 bis 7, **dadurch gekennzeichnet, dass** als Oxidationsmittel Luft, sauerstoffangereicherte Luft oder Sauerstoff zum Einsatz kommt.

## Claims

1. Apparatus for heating and transporting a glass melt, comprising a feeder channel (2) enclosed by side walls (4, 5) and a top (6) for transporting a glass melt (7) from an inlet region (9) to an outlet region (10) of the feeder channel (2) and comprising heating means for heating the glass melt (7) in the feeder channel (2), where the heating means comprise lances (13a, 13b, 13c, 13d, 13e, 13f) for a fuel and lances (16a, 16b, 16c, 16d, 16e, 16f) for an oxidant, which lances (13a, 13b, 13c, 13d, 13e, 13f, 16a, 16b, 16c, 16d, 16e, 16f) open, viewed in the flow direction of the glass melt (7), at a distance from one another into the feeder channel (2), **characterized in that** the lances (13a, 13b, 13c, 13d, 13e, 13f) for the fuel and/or the lances (16a, 16b, 16c, 16d, 16e, 16f) for the oxidant are equipped at least partly with exit openings directed in the flow direction or opposite to the flow direction of the glass melt (7).

2. Apparatus according to Claim 1, **characterized in that** the lances (3a, 13b, 13c, 13d, 13e, 13f) for fuel and the lances (16a, 16b, 16c, 16d, 16e, 16f) for oxidant are arranged, viewed in the flow direction of the glass melt (7), alternately in at least one of the side walls (4, 5) and/or the top (6) of the feeder channel (2).

3. Apparatus according to Claim 1 or 2, **characterized in that** lances (13a, 13b, 13c, 13d, 13e, 13f; 16a, 16b, 16c, 16d, 16e, 16f) for the fuel and for the oxidant are provided in the side walls (4, 5) on both sides, where the lances (13a, 13b, 13c, 13d, 13e, 13f; 16a, 16b, 16c, 16d, 16e, 16f) are arranged in the two side walls (4, 5) in an offset manner relative to one another, viewed in the flow direction of the glass melt (7).

4. Apparatus according to any of the preceding claims, **characterized in that** lances (13a, 13b, 13c, 13d, 13e, 13f; 16a, 16b, 16c, 16d, 16e, 16f) for the fuel and for the oxidant are provided in the side walls (4, 5) on both sides, where in each case at least one lance (13a, 13b, 13c, 13d, 13e, 13f) for the fuel and at least one lance (16a, 16b, 16c, 16d, 16e, 16f) for the oxidant are arranged opposite one another.

5. Method for heating and transporting a glass melt in a feeder channel (2) provided for transporting a glass melt (7), in which fuel and oxidant are, viewed in the flow direction of the glass melt (7), introduced at a distance from one another into the feeder channel (2) and reacted with one another in the feeder channel (2), **characterized in that** the fuel and/or the oxidant is introduced with a direction component parallel to the flow direction of the glass melt (7) into the feeder channel (2).

6. Method according to Claim 5, **characterized in that** fuel and oxidant are, viewed in the flow direction of the glass melt, introduced alternately at a distance from one another into the feeder channel (2) and reacted in the feeder.

7. Method according to either Claim 5 or 6, **characterized in that** the flow through at least part of the lances (13a, 13b, 13c, 13d, 13e, 13f) for the fuel and/or the lances (16a, 16b, 16c, 16d, 16e, 16f) for the oxidant is regulated as a function of a measured physical or chemical parameter.

8. Method according to any of Claims 5 to 7, **characterized in that** air, oxygen-enriched air or oxygen is used as oxidant.

## Revendications

1. Dispositif pour le chauffage et le transport d'une fonte de verre, comprenant un canal d'alimentation (2) bordé par des parois latérales (4, 5) et un couvercle (6), pour le transport d'une fonte de verre (7) depuis une zone d'entrée (9) jusqu'à une zone de sortie (10) du canal d'alimentation (2) et comprenant des moyens de chauffage pour le conditionnement en température de la fonte de verre (7) dans le canal d'alimentation (2),
les moyens de chauffage comprenant des lances (13a, 13b, 13c, 13d, 13e, 13f) pour un combustible et des lances (16a, 16b, 16c, 16d, 16e, 16f) pour un oxydant, lesdites lances (13a, 13b, 13c, 13d, 13e, 13f, 16a, 16b, 16c, 16d, 16e, 16f) débouchant dans le canal d'alimentation (2) espacées les unes des autres, observé dans la direction d'écoulement de la fonte de verre (7),
**caractérisé en ce que**
les lances (13a, 13b, 13c, 13d, 13e, 13f) pour le combustible et/ou les lances (16a, 16b, 16c, 16d, 16e, 16f) pour l'oxydant sont au moins partiellement munies d'orifices de déchargement orientés dans la direction d'écoulement ou dans le sens opposé à la direction d'écoulement de la fonte de verre (7).

2. Dispositif selon la revendication 1, **caractérisé en ce que** les lances (3a, 13b, 13c, 13d, 13e, 13f) pour le combustible et les lances (16a, 16b, 16c, 16d, 16e, 16f) pour l'oxydant sont agencées, observé dans la direction d'écoulement de la fonte de verre (7), en alternance dans au moins une des parois latérales (4, 5) et/ou dans le couvercle (6) du canal d'alimentation (2) .

3. Dispositif selon la revendication 1 ou 2, **caractérisé en ce que** des lances (13a, 13b, 13c, 13d, 13e, 13f ; 16a, 16b, 16c, 16d, 16e, 16f) pour le combustible et pour l'oxydant sont prévues dans les parois latérales (4, 5) des deux côtés, les lances (13a, 13b, 13c, 13d, 13e, 13f ; 16a, 16b, 16c, 16d, 16e, 16f) étant agencées dans les deux parois latérales (4, 5) en décalage les unes par rapport aux autres, observé dans la direction d'écoulement de la fonte de verre (7).

4. Dispositif selon l'une quelconque des revendications précédentes, **caractérisé en ce que** des lances (13a, 13b, 13c, 13d, 13e, 13f ; 16a, 16b, 16c, 16d, 16e, 16f) pour le combustible et pour l'oxydant sont prévues dans les parois latérales (4, 5) des deux côtés, respectivement au moins une lance (13a, 13b, 13c, 13d, 13e, 13f) pour le combustible et au moins une lance (16a, 16b, 16c, 16d, 16e, 16f) pour l'oxydant étant agencées à l'opposé l'une de l'autre.

5. Procédé pour le chauffage et le transport d'une fonte de verre dans un canal d'alimentation (2) destiné au transport d'une fonte de verre (7), selon lequel un combustible et un oxydant sont introduits espacés l'un de l'autre dans le canal d'alimentation (2), observé dans la direction d'écoulement de la fonte de verre (7), et mis en réaction l'un avec l'autre dans le canal d'alimentation (2),
**caractérisé en ce que**
le combustible et/ou l'oxydant sont introduits dans le canal d'alimentation (2) avec un composant d'orientation parallèle à la direction d'écoulement de la fonte de verre (7).

6. Procédé selon la revendication 5, **caractérisé en ce qu'**un combustible et un oxydant sont introduits dans le canal d'alimentation (2) espacés l'un de l'autre, observé dans la direction d'écoulement de la fonte de verre, et mis en réaction dans le canal d'alimentation.

7. Procédé selon l'une quelconque des revendications 5 ou 6, **caractérisé en ce que** le débit de matière est régulé par au moins une partie des lances (13a, 13b, 13c, 13d, 13e, 13f) pour le combustible et/ou des lances (16a, 16b, 16c, 16d, 16e, 16f) pour l'oxydant en fonction d'un paramètre physique ou chimique mesuré.

8. Procédé selon l'une quelconque des revendications 5 à 7, **caractérisé en ce que** de l'air, de l'air enrichi en oxygène ou de l'oxygène est utilisé en tant qu'oxydant.
